# EUROPÄISCHE PATENTSCHRIFT

(11) **EP 2 635 380 B1**
(45) Veröffentlichungstag und Bekanntmachung des Hinweises auf die Patenterteilung: **14.01.2015**
(21) Anmeldenummer: 11757167.9
(22) Anmeldetag: 31.08.2011
(51) Int. Cl.: B04B 9/08, B04B 9/12, F16D 43/16, F16B 21/16

(54) **ROTORLAGERUNG FÜR EINE LABORZENTRIFUGE**
ROTOR SUPPORT FOR A LABORATORY CENTRIFUGE
SUPPORT D'UN ROTOR POUR UNE CENTRIFUGEUSE DE LABORATOIRE

(30) Priorität: 01.11.2010 DE 202010014803 U
(43) Veröffentlichungstag der Anmeldung: 11.09.2013
(73) Patentinhaber: Sigma Laborzentrifugen GmbH, 37520 Osterode/Harz (DE)
(72) Erfinder: PETERS, Benjamin, 37077 Göttingen (DE)
(74) Vertreter: REHBERG HÜPPE + PARTNER
(86) Internationale Anmeldenummer: PCT/EP2011/004368
(87) Internationale Veröffentlichungsnummer: WO 2012/059151

(56) Entgegenhaltungen:
- WO-A1-2011/001729
- US-A- 2 329 499
- US-A- 6 063 018

## Beschreibung

Die Erfindung bezieht sich auf eine Rotorlagerung für eine Laborzentrifuge entsprechend dem Oberbegriff des Anspruchs 1.

Der Rotor einer solchen Laborzentrifuge ist innerhalb eines Gehäuses von oben auf das Ende einer Welle oder einer mit dieser in fester Verbindung stehenden Baugruppe aufsteckbar, die mit einem Zentrifugenantrieb in Verbindung steht. Er ist umfangsseitig mit Aufnahmen versehen, die zum Einsetzen von Gefäßen bestimmt sind, in denen die durch Zentrifugation zu behandelnden Substanzen aufgenommen sind. In Anbetracht der hohen Umdrehungsgeschwindigkeiten und der hiermit einher gehenden Unfallgefahr muss ein besonderes Augenmerk auf einen zuverlässigen und betriebssicheren Sitz des Rotors auf der Welle gerichtet sein. Risiken können sich hierbei aufgrund aerodynamischer, den Rotor von der Welle abhebender Effekte innerhalb des Zentrifugengehäuses, jedoch auch durch einen seitlichen Stoß auf dieses ergeben. Da unterschiedliche Rotoren zum Einsatz kommen, stehen diese austauschbar mit der Welle in Verbindung, wobei der Aufwand sowie der Zeitbedarf für die Montage bzw. Demontage eines Rotors nach Maßgabe der konstruktiven Ausbildung von zwischen dem Rotor und der Welle befindlichen Verriegelungsmitteln unterschiedlich ausfallen kann.

Aus dem Dokument WO 2010/025922 A1 ist eine vergleichbare Rotorlagerung bekannt, bei der ein mit einer, ein konisches Innenprofil aufweisenden Hülse auf einen, ein komplementär konisches Außenprofil aufweisenden, sich vertikal erstreckenden Antriebskopf aufsteckbar ist. Der Antriebskopf ist mit einer Anordnung von sich achsparallel erstreckenden Stiften versehen, die im Aufsteckzustand in entsprechende Ausnehmungen des Rotors hineinragen und zur Ausübung einer Mitnahmewirkung um die gemeinsame Achse von Rotor und Antriebskopf bestimmt sind. Der Antriebskopf trägt ferner zwei einander diametral gegenüberliegende, um zueinander und zu dessen Achse parallele Achsen entgegen der Kraft einer Rückstellfeder schwenkbare Kupplungselemente, die im Stillstand des Rotors auf einer Ringfläche der genannten Hülse aufliegen und bereits in dieser Lage eine axiale Sicherung der Aufsteckposition des Rotors bilden. Die Ringfläche ist konisch ausgebildet, und zwar mit der Maßgabe, dass mit steigender Drehzahl des Rotors die genannten Innen- und Außenprofile in eine zunehmend festere Anlage aneinander gezogen werden. Die Montage des Rotors kann zwar ohne Werkzeug durch bloßes Aufstecken auf den Antriebskopf bewirkt werden - zur Demontage ist jedoch ein mit einer Drucktaste versehenes stiftförmiges Betätigungselement erforderlich, um die auch im Stillstand wirksamen Kupplungselemente in eine solche Rückzugsposition zu überführen, in der sie nicht mehr auf der genannten Ringfläche aufliegen. Auch wird für die Unterbringung der Kupplungselemente, deren Rückstellfedern, sowie das Betätigungselement ein nicht unbeträchtliches Bauvolumen benötigt.

Aus dem Dokument US 2 329 499 A ist eine Rotorlagerung bekannt, bei der ein mit einem zylindrischen Innenprofil versehener Rotor auf einen dementsprechend gestalteten Wellenzapfen aufsteckbar ist. Über einander diametral gegenüberliegende in Ausnehmungen des Rotors gelagerte Verriegelungshebel, die drehzahlabhängig zum Eingriff mit in die Außenseite des Wellenzapfens eingeformte, sich axial erstreckende Schlitze oder Rillen bestimmt sind, ist im Betriebszustand des Rotors eine Kupplung zwischen Welle und Rotor dargestellt, und zwar derart, dass die Verriegelungshebel selbsttätig von ihrer Entriegelungsstellung in ihre, durch einen Eingriff mit diesen Schlitzen gekennzeichnete Kupplungs- bzw. Verriegelungsstellung überführbar sind. Der Zweck dieser Ausgestaltung besteht hauptsächlich in der Bereitstellung einer Kupplung von Rotor und Welle sowie in einer einfachen Demontierbarkeit des Rotors.

Aus dem Dokument US 6 063 018 A ist eine weitere vergleichbare Rotorlagerung be-kannt, bei der ein mit einem konischen Innenprofil ausgerüsteter Rotor auf einen mit einem dem entsprechenden Außenprofil versehenen Wellenzapfen aufsteckbar ist. Zur axialen Sicherung der Aufsteckposition sind zwei einander diametral gegenüberliegende Verriegelungshebel in Ausnehmungen des Wellenzapfens in einer Radialebene schwenkbar gelagert und jeweils mit einer Ringnut des Innenprofils des Rotors in einen Eingriff bringbar. Zur Überführung der Verriegelungshebel ausgehend von ihrer Verriegelungs- in ihre Entriegelungsstellung ist eine mit einem Betätigungsstift versehene Einrichtung erforderlich, für welche wiederum ein nicht unbeträchtliches Bauvolumen benötigt wird.

Es ist vor diesem Hintergrund die Aufgabe der Erfindung, eine Rotorlagerung der eingangs vorgestellten Art in konstruktiv einfacher Weise mit Hinblick auf die Darstellung einer axialen Sicherung als auch mit Hinblick auf eine Vereinfachung des Vorgangs der Demontage des Rotors zu verbessern. Gelöst ist diese Aufgabe bei einer solchen Rotorlagerung durch die Merkmale des Kennzeichnungsteils des Anspruchs 1.

Erfindungswesentlich ist, dass sowohl eine Montage als auch eine Demontage des Rotors durch Aufstecken auf das zugekehrte Ende der Welle oder auch eines mit dieser in fester Verbindung stehenden Bauteils bzw, Abziehen von diesem dargesstellt ist, und zwar ohne dass ein Werkzeug benötigt wird oder ein in die Rotorlagerung integriertes, manuell zu betätigendes Schaltorgan. Ein Austauschen eines Rotors ist somit in einfachster Weise und schnell durchführbar, wobei lediglich der Stillstand des Rotors vorausgesetzt wird. Zu diesem Zweck ist ein Verriegelungssystem vorgesehen, welches aus mehreren Verriegelungshebeln besteht, die zwischen einer Verriegelungs- und einer Entriegelungsstellung in Ebenen schwenkbar sind, welche sämtlich die Achse des Rotors bzw. der Welle enthalten. Die Schwenkbewegung der Verriegelungshebel wird selbsttätig eingeleitet, und zwar drehzahlabhängig unter Mitwirkung von auf die Verriegelungshebel einwirkenden Zentrifugalkräften.

Eine selbsttätige drehzahlabhängige Darstellung einer Schwenkbewegung ausgehend von der Entriegelungsstellung in die Verriegelungsstellung und umgekehrt kann im einfachsten Fall beispielsweise durch eine solche Massenverteilung eines jeden Verriegelungshebels relativ zu seiner Schwenkachse dargestellt werden, wonach schwerkraftbedingt die Entriegelungsstellung eine stabile Schaltstellung ist, in die der Verriegelungshebel bei Unterschreiten einer bestimmten Drehzahl selbsttätig kippt.

Die Lagerung der Verriegelungshebel ist auf dem Rotor eingerichtet und es wirken diese mit einer Ringnut zusammen, die auf der Welle oder dem mit dieser in fester Verbindung stehenden Bauteil angeordnet ist. Durch den Eingriff der Verriegelungshebel mit dieser Ringnut ist eine axiale Abzugsicherung für den Rotor eingerichtet. Die Verriegelungshebel sind in Umfangsrichtung in vorzugsweise gleichförmiger Verteilung vorgesehen, so dass eine gleichförmige Kraftüberleitung von dem Rotor auf die Welle gegeben ist.

Infolge der zueinander komplementär konischen Innenabschnitte des Rotors und der Außenabschnitte der Welle in Verbindung mit den Verriegelungshebeln ergibt sich im Betriebszustand des Rotors eine diesen abwärts auf die Welle ziehende, eine spielfreie Anlage bewirkende Kraft.

Entsprechend den Merkmalen des Anspruchs 2 wird auch die Schwenkbewegung der Verriegelungshebel ausgehend von der Verriegelungsstellung in die Entriegelungsstellung selbsttätig nach Maßgabe von auf die Verriegelungshebel einwirkenden Zentrifugalkräften drehzahlabhängig eingeleitet.

Gemäß den Merkmalen der Ansprüche 3 und 4 ist eine alle Verriegelungshebel beaufschlagende Ringfeder vorgesehen, mittels welcher eine Federvorspannung dargestellt ist, mit der die Entriegelungsstellung gesichert ist. Alle Verriegelungshebel unterliegen in dieser Stellung somit der gleichen mechanischen Vorspannung. Die Ringfeder bewirkt ferner drehzahlabhängig die selbsttätige Überführung aller Verriegelungshebel ausgehend von der Verriegelungsstellung in die Entriegelungsstellung, in der der Rotor einfach von der Welle axial abgezogen werden kann.

Die Merkmale des Anspruchs 5 sind auf eine solche Variante eines Verriegelungshebels gerichtet, der zwar drehzahlabhängig unter Mitwirkung von Zentrifugalkräften ausgehend von der Entriegelungs- in die Verriegelungsstellung überführbar ist, wobei jedoch die Verriegelungsstellung schwerkraftbedingt und ohne Mitwirkung von Federkräften die eine stabile Schaltstellung bildet und wobei die Entriegelungsstellung federkraftbedingt die andere stabile Schaltstellung bildet. Ein solches bistabiles Schaltverhalten des Verriegelungshebels kann durch eine dementsprechende Massenverteilung relativ zu der Schwenkachse in Verbindung mit einer dem angepassten Dimensionierung sowie Positionierung eines den Verriegelungshebel beaufschlagenden Federelements erreicht werden. Während des Beschleunigens des Rotors stellt sich fliehkraftbedingt die Verriegelungsstellung ein, welche während eines Abbremsens bis zum Stillstand beibehalten wird. Ein Schwenken in die Entriegelungsstellung kann in diesem Fall durch bloßes Abziehen des Rotors herbeigeführt werden, wodurch eine Mitnahmewirkung auf die Verriegelungshebel ausübbar ist und diese in die Entriegelungsstellung kippen..

Jeder Verriegelungshebel ist entsprechend den Merkmalen des Anspruchs 6 in einer Ausnehmung des Rotors mittels eines Wälzlagers gelagert.

Jeder Verriegelungshebel ist entsprechend den Merkmalen des Anspruchs 7 mit einem Steuerkörper ausgerüstet, dessen Masse mit der Maßgabe bemessen und relativ zu der dessen Achse angeordnet ist, dass sich infolge der an diesem wirkenden Zentrifugalkräfte eine Schwenkung ausgehend von der durch Federvorspannung gesicherten Entriegelungsstellung in Richtung auf die Verriegelungsstellung einstellt. Der Verriegelungshebel ist zu diesem Zweck nach Art eines zweiseitigen Hebels gelagert, wobei sich auf der einen Seite dessen Schwenkachse der Steuerkörper befindet, über dessen Masse und Masseverteilung relativ zu der Schwenkachse die drehzahlabhängige Schwenkcharakteristik unter Berücksichtigung der Federvorspannung konstruktiv darstellbar ist.

Die Merkmale der Ansprüche 8 und 9 sind auf die weitere Ausgestaltung des Verriegelungshebels und der genannten Ringnut gerichtet. Die Ringnut weist in jedem Fall einen Abschnitt auf, der zur Anlage an einer Verriegelungskante des Verriegelungshebels bestimmt ist, wobei die Verriegelungskante nach Maßgabe der auf den Steuerkörper einwirkenden Zentrifugalkraft gegen diesen Abschnitt gepresst wird, hierbei im Betrieb der Laborzentrifuge eine, den Rotor nach unten, dass heißt gegen eine Anlagefläche der Welle oder eines mit dieser in fester Verbindung stehenden Bauteils ziehende Kraft erzeugend.

Die Merkmale der Ansprüche 10 und 11 sind auf alternative Gestaltungsformen der zur Aufnahme der Ringfeder bestimmten Ausnehmungen der Verriegelungshebel gerichtet. Diese Ausnehmungen sollten derart gestaltet sein, dass eine einfache Montage der Ringfeder möglich ist und darüber hinaus sichergestellt ist, dass ein unbeabsichtigtes Austreten der Ringfeder aus diesen Ausnehmungen zuverlässig unterbunden ist. Zu diesem Zweck kann die Ausnehmung mit einem Einführungsschlitz versehen sein, dass heißt als ein in Umfangsrichtung offenes Profil ausgebildet sein. In diesem Fall wird durch die Lage sowie die Bemessung des Schlitzes ein Austreten der Ringfeder aus der Ausnehmung verhindert. Die Ausnehmung kann jedoch auch als geschlossenes Profil ausgebildet sein, so dass eine im Ausgangszustand als lineares Federelement vorliegende Feder in diese Ausnehmungen nacheinander eingefädelt wird, wobei deren Enden schließlich zur Darstellung einer Ringfeder miteinander verbunden werden.

Man erkennt, dass mit der vorliegenden Rotorlagerung eine besonders einfach handhabbare betriebssichere Ausführungsform vorliegt, die in kürzester Zeit einen Rotorwechsel ermöglicht.

Die Erfindung wird im Folgenden unter Bezugnahme auf das in den Zeichnungen dargestellte Ausführungsbeispiel näher beschrieben werden. Es zeigen:
Fig. 1 eine perspektivische Ansicht einer erfindungsgemäßen Rotorlagerung in teilweisem Schnitt;
Fig. 2 eine seitliche Ansicht einer erfindungsgemäßen Rotorlagerung in einer vertikalen Schnittebene;
Fig. 3 eine teilweise vergrößerte Darstellung der Rotorlagerung gemäß Fig. 2 in der Entriegelungsstellung;
Fig. 4 eine teilweise vergrößerte Darstellung der Rotorlagerung gemäß Fig. 2 in der Verriegelungstellung;
Fig. 5 eine vergrößerte Teildarstellung V der Fig. 3;
Fig. 6 eine vergrößerte Teildarstellung VI der Fig. 3;
Fig. 7 eine vergrößerte Teildarstellung VII der Fig. 4;
Fig. 8 eine vergrößerte Teildarstellung VIII der Fig. 4;
Fig. 9 eine Einzelheit IX der Fig. 5;
Fig. 10 eine Einzelheit X der Fig.4.

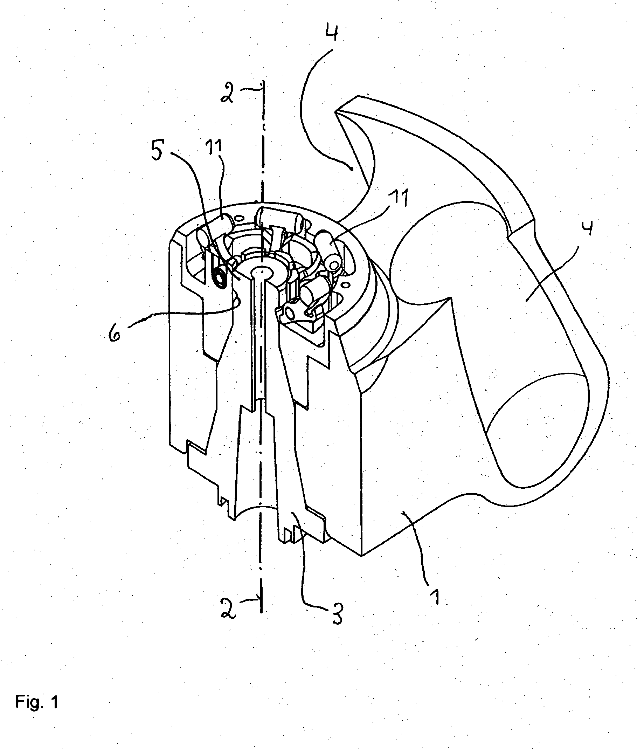

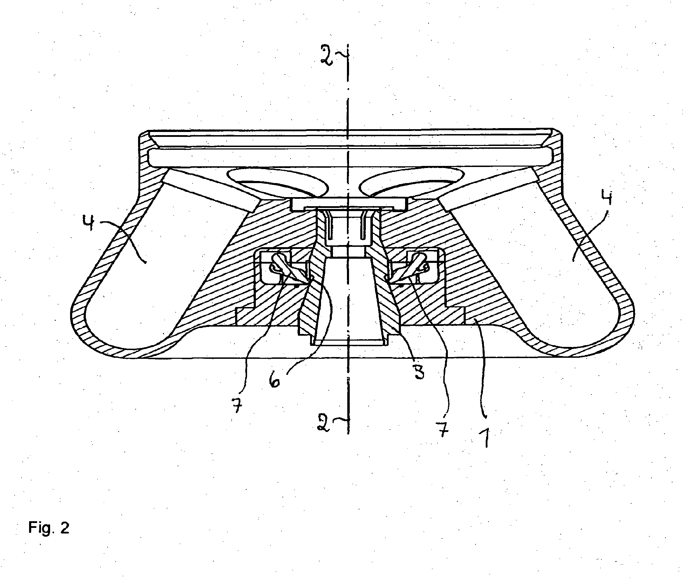

Die Fig. 1 und 2 zeigen jeweils einen Rotor 1 einer Laborzentrifuge, der auf das obere Ende einer, um eine Achse 2 drehbar gelagerte Welle 3 aufsteckbar ist. Die Welle 3 steht in zeichnerisch nicht dargestellter Weise mit einem Antrieb in Verbindung.

Der Rotor 1 ist in an sich bekannter Weise im Umfangsbereich mit Ausnehmungen 4 versehen sehen, die sich aufwärts unter einem Winkel in Richtung auf die Achse 2 hin erstrecken und jeweils zur Aufnahme von durch Zentrifugation zu behandelnden Stoffgemischen bestimmten Gefäßen eingerichtet sind.

Die Welle 3 weist auf ihrem oberen, zum Aufstecken des Rotors 1 bestimmten Ende 5 mehrere, axial von oben nach unten aufeinander folgende sich konisch erweiternde Abschnitte auf, wobei das Innenprofil des Rotors 1 dem angepasste Abschnitte aufweist. Insbesondere weist das Außenprofil der Welle 3 eine Ringnut 6 auf, die zum Zusammenwirken mit einem im Folgenden zu beschreibenden Verriegelungssystem eingerichtet ist, welches dazu bestimmt ist, einen festen Sitz des Rotors 1 in der Aufsteckposition zu sichern, und zwar insbesondere während des Betriebs der Laborzentrifuge.

Das Verriegelungssystem besteht aus einer Anordnung von Verriegelungshebeln 7, die jeweils um Achsen 8 schwenkbar in Ausnehmungen 9 des Innenprofils des Rotors 1 gelagert sind, die sich senkrecht zu der Achse 2 erstrecken. Es sind mehrere derartige Verriegelungshebel 7 in gleichförmiger Umfangsverteilung vorgesehen, deren Achsen sich sämtlich in einer gemeinsamen Ebene senkrecht zu der Achse 2 erstrecken. Dementsprechend ist jeder Verriegelungshebel 7 in einer Ebene schwenkbar, in welcher sich auch die Achse 2 befindet. Um eine reproduzierbar leichtgängige Schwenkbewegung der Verriegelungshebel 7 zu erreichen, sind diese vorzugsweise über Wälzlager 15 innerhalb der Ausnehmungen 9 gelagert.

Jeder Verriegelungshebel 7 weist an seinem einen, der Welle 3 zugekehrten Ende eine Verriegelungskante 10 auf, die in einer noch zu beschreibenden Weise zum Eingriff mit der Ringnut 6 angeordnet und eingerichtet ist.

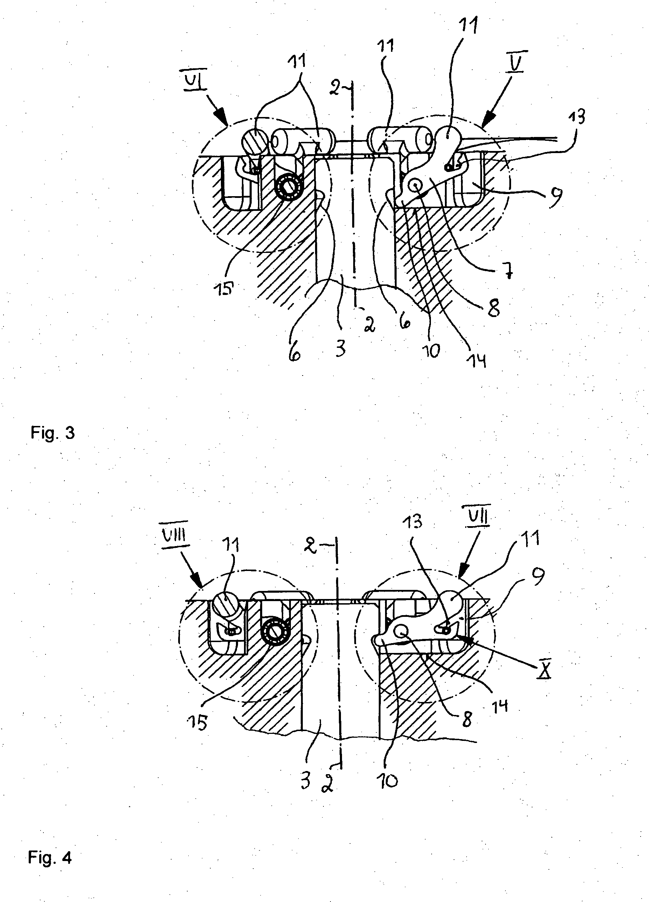

Jeder Verriegelungshebel 7 weist an seinem der Verriegelungskante 10 gegenüberliegenden Ende einen zylindrischen Steuerkörper 11 auf. Schließlich stehen alle Verriegelungshebel 7 über eine Ringfeder 12 in Verbindung, die in eine jeweilige Ausnehmung 13 eines jeden Verriegelungshebels 7 eingesetzt ist. Die Ausnehmungen 13 der Verriegelungshebel 7 sind mit der Maßgabe relativ zu den Achsen 8 angeordnet, dass über die Ringfeder 12 im Stillstand des Rotors 1 eine alle Verriegelungshebel 7 in der in Fig. 3 dargestellten Entriegelungsstellung haltende Kraft auf die Verriegelungshebel 7 ausübbar ist. Diese Stellung ist dadurch gekennzeichnet, dass die Verriegelungskanten 10 am Bodenbereich 14 der Ausnehmung 9 anliegen, der insoweit eine Anschlagfunktion erfüllt und gleichzeitig aus einem Eingriffsbereich mit der Ringnut 6 herausgeschwenkt sind. Diese Entriegelungsstellung ist somit durch die Ringfeder 12 gesichert.

Wird der Rotor 1 über die Welle 3 in eine Rotation um die Achse 2 versetzt, ergibt sich infolge der an allen Steuerkörpern 11 angreifenden Zentrifugalkräfte bei Überschreiten einer definierten, durch die Kraft der Ringfeder 12 konstruktiv vorgegebenen Drehzahl eine Auslenkung der Verriegelungshebel 7 um deren Achsen 8, und zwar ausgehend von der in Fig. 3 gezeigten Entriegelungsstellung in die in Fig. 4 gezeigte Verriegelungsstellung, in der ein Eingriff der Verriegelungskante 10 mit der Ringnut 6 gegeben ist.

In der Verriegelungsstellung, die sich somit drehzahlabhängig selbsttätig einstellt, ist die axiale Position des Rotors 1 auf der Welle 3 formschlüssig gesichert.

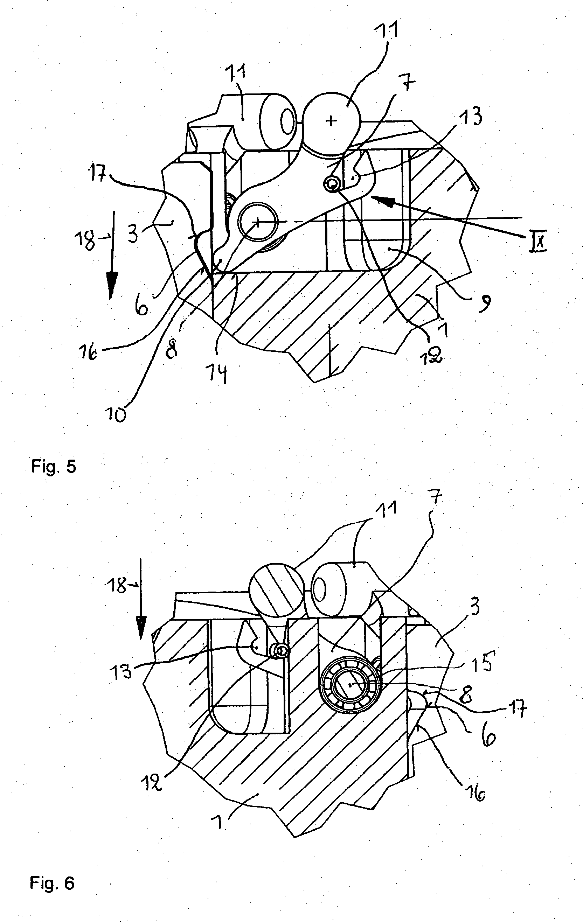

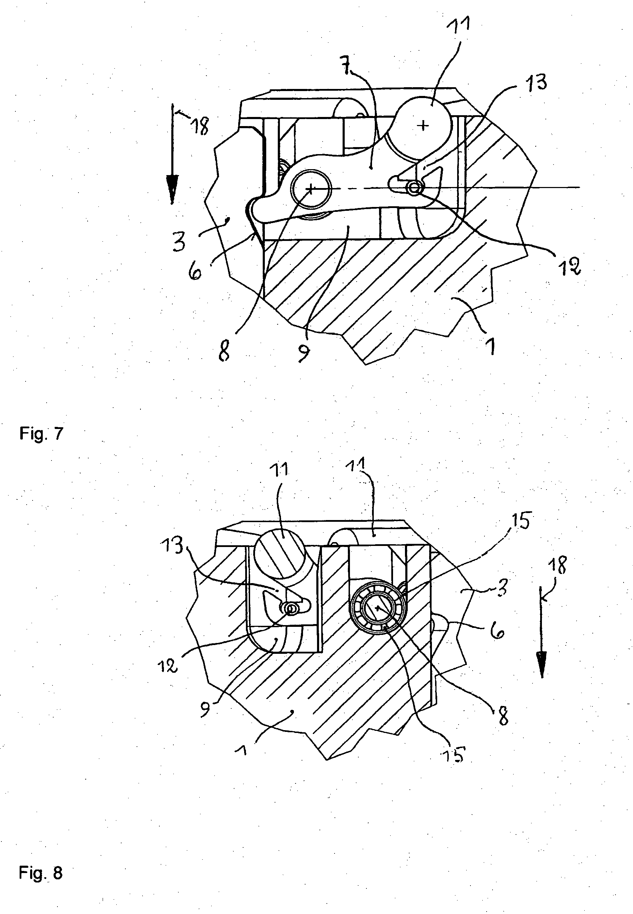

Wie insbesondere die Figuren 5 bis 8 zeigen, besteht das Querschnittsprofil der Ringnut 6 aus einem ersten unterseitigen, sich aufwärts und bezüglich der Achse der Welle 3 einwärts zumindest angenähert geradlinig erstreckenden Abschnitt 16, an den sich ein gekrümmter Abschnitt 17 anschließt, der eine Anlagekante für die Verriegelungskante 10 des Verriegelungshebels 7 bildet.

Im Betriebszustand des Rotors 1, der fliehkraftbedingt eine Rotation des Verriegelungshebels 7 ausgehend von der in Fig. 5 gezeigten Entriegelungsstellung im Uhrzeigersinn um die Achse 8 bewirkt, und zwar bis in eine Verriegelungsstellung, die die durch eine Anlage der Verriegelungskante 10 an dem Abschnitt 17 gekennzeichnet ist, ergibt sich eine den Rotor 1 abwärts in Richtung des Pfeiles 18 auf die Welle 3 ziehende Kraft, so dass eine sichere spielfreie Anlage der konischen Innenprofilabschnitte des Rotors 1 an den komplementär konischen Außenprofilabschnitten der Welle 3 dargestellt ist.

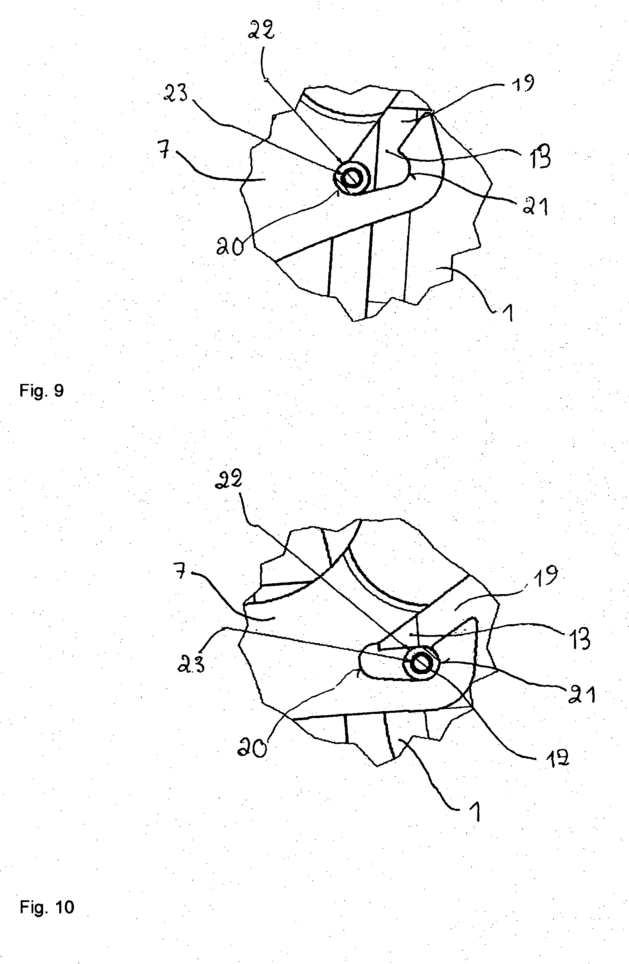

Wie die Figuren 9, 10 zeigen, ist die Ausnehmung 13 eines jeden Veriegelungshebels 7 durch einen Einführungsschlitz 19 gekennzeichnet, über welchen die Ringfeder 12 in die Ausnehmung 13 eines jeden Verriegelungshebels 7 einsetzbar ist. Die Ringfeder 12 kann hierbei als Ringstruktur montiert werden.

In der in Fig. 9 gezeigten Entriegelungsstellung liegt die Ringfeder 12 an der radialen Innenseite 20 der Ausnehmung 13 an und übt eine den am Bodenbereich 14 der Ausnehmung 9 des Rotors 1 anliegenden Verriegelungshebel 7 in dieser Stellung sichernde Kraft auf diesen aus. In der in Fig. 10 gezeigten Verriegelungsstellung hingegen ist die Ringfeder 12 in auswärtiger Richtung bis zur Anlage an einer radialen Außenseite 21 der Ausnehmung 13 ausgelenkt.

Das Querschnittsprofil der Ausnehmung 13 bildet infolge des Einführungsschlitzes 19 an dieser Stelle in jedem Fall eine Querschnittsminderung, die mit der Maßgabe bemessen ist, dass ein fliehkraftbedingtes unbeabsichtigtes oder zufälliges Austreten der Ringfeder 12 aus der Ausnehmung 13 heraus zuverlässig unterbunden ist. Praktisch kann die Ringfeder 12 als Wurmfeder 22 konzipiert sein, die innenseitig zur Stabilisierung einen Federdrahtkern 23 führt. Eine solche Feder kann als lineares Bauelement eingesetzt werden, dessen Enden bei der Montage zwecks Bildung einer Ringstruktur miteinander verbunden werden. Dies bietet den Vorteil, dass anstelle der Einführungsschlitze 19 lediglich zur Aufnahme der Wurmfeder 22 bestimmte Bohrungen oder vergleichbare umfangsseitig geschlossene Ausnehmungsprofile benutzt werden. Ein fliehkraftbedingtes radiales Austreten der Ringfeder 12 ist somit zuverlässig unterbunden.

Man erkennt anhand der vorstehenden Ausführungen, dass die erfindungsgemäße Rotorlagerung ein axiales Aufstecken des Rotors 1 von oben auf die Welle 3 ermöglicht, wobei eine formschlüssig wirksame Sicherung, insbesondere Verriegelung sich infolge der Rotation des Rotors 1 selbsttätig einstellt, nämlich dadurch, dass die Verriegelungshebel 7 in einen Eingriff mit der Ringnut 6 treten.

Der Verriegelungszustand wird ebenfalls selbsttätig gelöst, nämlich infolge der Rückstellkraft der Ringfeder 12, sobald eine Mindestdrehzahl unterschritten ist, so dass die Verriegelungshebel 7 selbsttätig in die Entriegelungsstellung überführt werden, und der Rotor 1 anschließend entnommen werden kann.

**Bezugszeichenliste:**

| | | | | | |
|---|---|---|---|---|---|
| 1. | Rotor | 9. | Ausnehmung | 17. | Abschnitt |
| 2. | Achse | 10. | Verriegelungskante | 18. | Pfeil |
| 3. | Welle | 11. | Steuerkörper | 19. | Einführungsschlitz |
| 4. | Ausnehmung | 12. | Ringfeder | 20. | Innenseite |
| 5. | oberes Ende | 13. | Ausnehmung | 21. | Außenseite |
| 6. | Ringnut | 14. | Bodenbereich | 22. | Wurmfeder |
| 7. | Verriegelungshebel | 15. | Wälzlager | 23. | Federdrahtkern |
| 8. | Achse | 16. | Abschnitt | | |

## Patentansprüche

1. Rotorlagerung für eine Laborzentrifuge, mit einem auf eine, um eine Achse (2) drehbar gelagerten Welle (3) aufsteckbaren Rotor (1), mit einem zur axialen Sicherung des Rotors (1) bestimmten Verriegelungssystem, welches aus einer Anordnung von jeweils um sich senkrecht zu der Achse (2) erstreckende Achsen (8) zwischen einer Verriegelungsstellung und einer Entriegelungsstellung schwenkbar gelagerten Verriegelungshebeln (7) besteht, wobei die Verriegelungshebel (7) an dem Rotor (1) in die Achse (2) enthaltenden Ebenen schwenkbar gelagert und selbsttätig drehzahlabhängig zumindest aus der Entriegelungsstellung in die Verriegelungsstellung überführbar sind, **dadurch gekennzeichnet, dass** an der Welle (3) eine Ringnut (6) angeordnet ist, die in der Verriegelungsstellung zum Zusammenwirken mit den Verriegelungshebeln (7) eingerichtet ist und den Rotor (1) gegenüber der Welle (2) axial fixiert, und dass die Welle (3) mit zum Aufstecken des Rotors (1) bestimmten, zu den Innenprofilabschnitten des Rotors (1) komplementär konisch ausgebildeten Außenprofilabschnitten versehen ist, so dass sich im Betriebszustand eine den Rotor (1) in Richtung auf die Welle (3) ziehende Kraft ergibt.

2. Rotorlagerung nach Anspruch 1, **dadurch gekennzeichnet, dass** die Verriegelungshebel (7) selbsttätig drehzahlabhängig aus der Verriegelungsstellung in die Entriegelungsstellung überführbar sind.

3. Rotorlagerung nach Anspruch 1 oder 2, **dadurch gekennzeichnet, dass** die Verriegelungshebel (7) in der Entriegelungsstellung unter Federvorspannung stehen.

4. Rotorlagerung nach Anspruch 3, **dadurch gekennzeichnet, dass** zur Darstellung der Federvorspannung eine Ringfeder (12) vorgesehen ist, die in Ausnehmungen (13) der Verriegelungshebel (7) aufgenommen ist.

5. Rotorlagerung nach Anspruch 1 oder 3 bis 4, **dadurch gekennzeichnet, dass** die Masseverteilung eines jeden Verriegelungshebels (7) relativ zu der Achse (8) mit der Maßgabe eingerichtet ist, dass die Verriegelungsstellung schwerkraftbedingt stabil ist und dass die Entriegelungsstellung durch axiales Abziehen des Rotors (1) von der Welle (3) unter Ausübung einer Mitnahmewirkung auf den Verriegelungshebel (7) darstellbar ist.

6. Rotorlagerung nach einem der Ansprüche 1 bis 5, **dadurch gekennzeichnet, dass** jeder Verriegelungshebel (7) in einer Ausnehmung (9) des Rotors (1) mittels eines Wälzlagers (15) schwenkbar gelagert ist.

7. Rotorlagerung nach einem der Ansprüche 1 bis 6, **dadurch gekennzeichnet, dass** an jedem Verriegelungshebel (7) ein Steuerkörper (11) zur Darstellung der zur Einleitung der Schwenkbewegung in Richtung auf die Verriegelungsstellung hin erforderlichen Zentrifugalkraft angeordnet ist.

8. Rotorlagerung nach einem der Ansprüche 1 bis 7, **dadurch gekennzeichnet, dass** an jedem Verriegelungshebel (7) eine Verriegelungskante (10) angeformt ist, die in der Verriegelungsstellung mit der Ringnut (6) im Eingriff steht.

9. Rotorlagerung nach einem der Ansprüche 1 bis 8, **dadurch gekennzeichnet, dass** die Ringnut (6) einen geradlinigen, zum Einführen des zugekehrten Endes des Verriegelungshebels (7) bestimmten Abschnitt (16) und - sich an diesen anschließend - einen gekrümmten, zur Anlage des zugekehrten Endes bestimmten Abschnitt (17) aufweist.

10. Rotorlagerung nach einem der Ansprüche 4 bis 9, **dadurch gekennzeichnet, dass** jede, zur Aufnahme der Ringfeder (12) bestimmte Ausnehmung (9) einen Einführungsschlitz (19) aufweist.

11. Rotorlagerung nach einem der Ansprüche 4 bis 9, **dadurch gekennzeichnet, dass** jede, zur Aufnahme der Ringfeder (12) bestimmte Ausnehmung ein umfangsseitig geschlossenes Profil aufweist.

## Claims

1. Rotor bearing for a laboratory centrifuge, having a rotor (1) which can be placed onto a shaft (3) supported for being rotatable about an axis (2), having a locking system intended for axially securing the rotor (1), wherein the locking system comprises an arrangement of locking levers (7) which are each supported for being able to pivot about axes (8) extending perpendicular to the axis (2) between a locking position and an unlocking position, wherein the locking levers (7) are pivotably supported at the rotor (1) in planes containing the axis (2) and wherein the locking levers (7) can be transferred automatically dependent on the rotational speed at least from the unlocking position into the locking position, **characterised by** an annular groove (6) being disposed at the shaft (3), wherein the annular groove (6) is configured for cooperating with the locking levers (7) in the locking position and wherein the annular groove (6) axially fixes the rotor (1) with respect to the shaft (2), wherein the shaft (3) is provided with conical-shaped outer profile sections being complementary to inner profile sections of the rotor (1) and being intended for placing the rotor (1) thereon such that in the operating state a force is produced biasing the rotor (1) towards the shaft (3).

2. Rotor bearing of claim 1, wherein it is possible to transfer the locking levers (7) automatically dependent on the rotational speed from the locking position into the unlocking position.

3. Rotor bearing of claim 1 or 2, wherein in the unlocking position the locking levers (7) are biased by a pretension of a spring.

4. Rotor bearing of claim 3, wherein a ring spring or circumferential spring (12) is provided for providing the pretension of a spring and the ring spring or circumferential spring (12) is accommodated in recesses (13) of the locking levers (7).

5. Rotor bearing of claim 1, 3 or 4, wherein the mass distribution of each locking lever (7) relative to the axis (8) is chosen such that the locking position is stable due to gravity and the unlocking position is caused by axially removing the rotor (1) from the shaft (3) under exertion of a following effect at the locking levers (7).

6. Rotor bearing of one of claims 1 to 5, wherein each locking lever (7) is pivotably supported in a recess (9) of the rotor (1) by means of a rolling contact bearing (15).

7. Rotor bearing of one of claims 1 to 6, wherein a control body (11) is located at each locking lever (7) for providing a centrifugal force being required for initiating the pivoting movement towards the locking position.

8. Rotor bearing of one of claims 1 to 7, wherein a locking edge (10) is formed at each locking lever (7) wherein in the locking position the locking edge is in engagement with the annular groove (6).

9. Rotor bearing of one of claims 1 to 8, wherein the annular groove (6) has a straight or linear section (16) intended for insertion of the facing end of the locking lever (7) and - adjoining this section - a curved section (17) intended for establishing a contact with the facing end.

10. Rotor bearing of one of claims 4 to 9, wherein each recess (9) intended for accommodating the ring spring or circumferential spring (12) comprises a slit (19) for insertion.

11. Rotor bearing of one of claims 4 to 9, wherein each recess intended for accommodating the ring spring or circumferential spring (12) comprises a profile being closed in circumferential direction.

## Revendications

1. Palier de rotor pour une centrifugeuse de laboratoire, avec un rotor (1) enfiché sur un arbre (3) logé de manière rotative autour d'un axe (2), avec un système de verrouillage conçu pour la fixation axiale du rotor (1), qui est constitué de leviers de verrouillage (7) logés de manière pivotante, chacun autour d'un ensemble d'axes (8) s'étendant perpendiculairement à l'axe (2) entre une position de verrouillage et une position de déverrouillage, ces leviers de verrouillage (7) étant logés de manière pivotante sur le rotor (1) dans le plan contenant l'axe (2) et pouvant être déplacé automatiquement, en fonction de la vitesse de rotation, au moins de la position de déverrouillage vers la position de verrouillage, **caractérisé en ce que**, sur l'arbre (3), se trouve une rainure annulaire (6), qui est configuré, dans la position de verrouillage, pour interagir avec les leviers de verrouillage (7) et fixe le rotor (1) par rapport à l'arbre (2), et **en ce que** l'arbre (3) est muni de portions profilées externes, conçues pour l'emboîtement du rotor (1), ayant une forme conique complémentaire des portions profilées internes du rotor (1), de façon à ce, dans l'état de fonctionnement, il en résulte une force tirant le rotor (1) en direction de l'arbre (3).

2. Palier de rotor selon la revendication 1, **caractérisé en ce que** le levier de verrouillage (7) peut être déplacé automatiquement, en fonction de la vitesse de rotation, de la position de verrouillage vers la position de déverrouillage.

3. Palier de rotor selon la revendication 1 ou 2, **caractérisé en ce que** les leviers de verrouillage (7) se trouvent, dans la position de déverrouillage, sous l'action d'une tension de ressort.

4. Palier de rotor selon la revendication 3, **caractérisé en ce que**, pour la représentation de la tension de ressort, un ressort annulaire (12) est prévu, qui est logé dans des évidements (13) des leviers de verrouillage (7).

5. Palier de rotor selon la revendication 1 ou 3 à 4, **caractérisé en ce que** la répartition de masse de chaque levier de verrouillage (7) par rapport à l'axe (8) est prévue, avec pour règle que la position de verrouillage est stable grâce à la force de gravité et que la position de déverrouillage peut être représentée par une traction axiale du rotor (1) par l'arbre (3) en exerçant une action d'entraînement sur le levier de verrouillage (7).

6. Palier de rotor selon l'une des revendications 1 à 5, **caractérisé en ce que** chaque levier de verrouillage (7) est logé de manière pivotante dans un évidement (9) du rotor (1) à l'aide d'un palier à rouleaux (15).

7. Palier de rotor selon l'une des revendications 1 à 6, **caractérisé en ce que**, sur chaque levier de verrouillage (7) se trouve un corps de commande (11) pour la représentation de la force centrifuge nécessaire à l'initialisation du mouvement de pivotement en direction de la position de verrouillage.

8. Palier de rotor selon l'une des revendications 1 à 7, **caractérisé en ce que**, sur chaque levier de verrouillage (7), se trouve une arête de verrouillage (10) qui est emboîté, dans la position de verrouillage, avec la rainure annulaire (6).

9. Palier de rotor selon l'une des revendications 1 à 8, **caractérisé en ce que** la rainure annulaire (6) présente une portion (16) droite conçue pour l'insertion de l'extrémité orientée du levier de verrouillage (7) et, après cette portion, une portion (17) incurvée pour l'appui de l'extrémité orientée.

10. Palier de rotor selon l'une des revendications 4 à 9, **caractérisé en ce que** chaque évidement (9) conçu pour le logement du ressort annulaire (12) présente une fente d'insertion (19).

11. Palier de rotor selon l'une des revendications 4 à 9, **caractérisé en ce que** chaque évidement conçu pour le logement du ressort annulaire (12) présente un profil fermé sur la circonférence.
